# EUROPÄISCHE PATENTSCHRIFT

(11) **EP 1 789 807 B1**
(45) Veröffentlichungstag und Bekanntmachung des Hinweises auf die Patenterteilung: **05.03.2008**
(21) Anmeldenummer: 05767974.8
(22) Anmeldetag: 13.07.2005
(51) Int. Cl.: G01P 15/18, B60R 21/01

(54) **SICHERHEITSSYSTEM FÜR FAHRZEUGINSASSEN**
SAFETY SYSTEM FOR VEHICLE PASSENGERS
SYSTÈME DE S CURIT POUR LES OCCUPANTS D'UN V HICULE

(30) Priorität: 02.09.2004 DE 102004042377
(43) Veröffentlichungstag der Anmeldung: 30.05.2007
(73) Patentinhaber: ROBERT BOSCH GMBH, 70442 Stuttgart (DE)
(72) Erfinder: KROENINGER, Mario, 77815 Buehl (DE); THEISEN, Marc, 74354 Besigheim (DE); BUNSE, Michael, 71665 Vaihingen/Enz (DE); MOLDENHAUER, Maike, 71111 Waldenbuch (DE); WELLHOEFER, Matthias, 71701 Schwieberdingen (DE); FRESE, Volker, 71701 Schwieberdingen (DE)
(86) Internationale Anmeldenummer: PCT/EP2005/053353
(87) Internationale Veröffentlichungsnummer: WO 2006/024573

(56) Entgegenhaltungen:
- DE-A1- 10 017 084
- US-B1- 6 390 498

## Beschreibung

### Stand der Technik

Die Erfindung betrifft ein Sicherheitssystem für Fahrzeuginsassen nach dem Oberbegriff des Anspruchs 1. Weiterhin betrifft die Erfindung ein Verfahren für die Steuerung eines Sicherheitssystems nach dem Oberbegriff des Anspruchs 6. Ein Sicherheitssystem der gattungsgemäßen Art ist beispielsweise aus dem Aufsatz von W. Suchowerskyj "Evolution en matiere de detecteurs de choc" in 1141 Ingenieurs de l'Automobile (1982) No.6, Seiten 69 bis 77 Paris, bekannt. Das Sicherheitssystem umfasst wenigstens einen Sensor, insbesondere einen für Beschleunigungen empfindlichen Sensor, ein Steuergerät, sowie Rückhaltemittel, wie Airbags und Gurtstraffer. Moderne Sicherheitssysteme verfügen über individuell steuerbare und mehrstufig auslösbare Airbags. Je nach Unfallsituation werden nur einzelne Stufen oder alle Stufen gezündet. Außerdem werden nur diejenigen Rückhaltemittel aktiviert, die zum Schutz der Fahrzeuginsassen beitragen. Das bedeutet beispielsweise, dass die einem nicht mit einem Insassen belegten Platz zugeordneten Rückhaltemittel nicht aktiviert werden. Eine derartige "intelligente" Steuerung der Rückhaltemittel setzt jedoch voraus, dass die Art des Unfalls möglichst schnell und zuverlässig erkannt wird. Unter Art des Unfalls versteht man in diesem Zusammenhang insbesondere die Schwere des Unfalls und die Richtung, aus der der Zusammenstoß mit einem Fahrzeug oder einem anderen Hindernis erfolgt. Bei der Crashanalyse wird infolgedessen der Aufprall von vorn, von hinten, von der Seite oder in schräger Richtung auf das Fahrzeug unterschieden. Die Art des Unfalls versucht man mit verschiedenartigen Sensoren zu bestimmen. So werden bereits Beschleunigungssensoren eingesetzt, die die Beschleunigung des Fahrzeugs in Längs- und Querrichtung erfassen. Derartige Beschleunigungssensoren werden entweder an einer zentralen Stelle in dem Fahrzeug oder dezentral eingesetzt. Für die Erkennung eines Seitenaufpralls werden auch in peripheren Bereichen des Fahrzeugs eingebaute Drucksensoren eingesetzt. Um den Überschlag eines Fahrzeugs zu detektieren ist es bereits auch bekannt, Drehratensensoren einzusetzen. Schließlich ist es bereits bekannt, so genannte Precrashsensoren einzusetzen, um einen drohenden Zusammenstoß möglichst frühzeitig zu erkennen. Diese Precrashsensoren überwachen das Fahrzeugumfeld mittels Video-, Radar-, Laser- und Ultraschallsensoren. Als besonders kritisch für die Fahrzeuginsassen und zudem schwer erkennbar gelten nach wie vor Unfälle, bei denen das Fahrzeug schräg von vorn oder schräg von hinten, insbesondere in dem Bereich der Kotflügel getroffen wird.

Aus DE 100 17 084 A1 ist eine Anordnung zum Auslösen von Rückhaltemitteln in einem Kraftfahrzeug bekannt, die ohne Drehbewegungssensoren auskommt und bei jeder erdenklichen Aufprallunfallart den Fahrzeuginsassen bestmöglichen Schutz bietet. Dies wird dadurch erreicht, dass X-Y-Beschleunigungsaufnehmer vorgesehen sind. Aus US 6,390,498 B1 ist es bekannt, Personenschutzmittel in Abhängigkeit von Beschleunigungssignalen und Rotationssignalen anzusteuern.

### Vorteile der Erfindung

Die Erfindung mit den Merkmalen des Anspruchs 1 ermöglicht es, einen Aufprall auf das Fahrzeug frühzeitiger und zuverlässiger zu detektieren, der schräg von vorn oder hinten, beziehungsweise seitlich auf einen Kotflügel in dem Front- oder Heckbereich erfolgt. Infolge der schnelleren und zuverlässigeren Erkennung der Art des Unfalls ist es dann möglich, Rückhaltemittel gezielter und zuverlässiger zu aktivieren. Die Erfindung geht dabei von der Erkenntnis aus, dass das eigene Fahrzeug bei einem Aufprall der beschriebenen Art eine Beschleunigung in Stoßrichtung erfährt. Da dabei die Kraft außerhalb des Schwerpunkts des Fahrzeugs angreift, wird ein Drehimpuls auf das Fahrzeug ausgeübt, der das Fahrzeug in eine Rotation um die z- oder Hochachse versetzt. Diese Rotation kann vorteilhaft mit einem Drehratensensor erfasst werden, der für eine Rotation um die z- Achse empfindlich ist. Ferner wird das Fahrzeug durch die Stoßeinwirkung auf der Unfallseite und durch die Bremswirkung der Reifen auf der dem Aufprall abgewandten Seite ein Drehmoment um die x- oder Längsachse des Fahrzeugs erfahren und dadurch wenigstens eine Wankbewegung ausführen. Diese Wankbewegung kann vorteilhaft wieder mittels eines für Drehbewegungen um die x-Achse empfindlichen Drehratensensors erfasst werden. Der Hauptvorteil der Erfindung besteht darin, dass mittels der erfinderischen Lösung eine bisher schwierig zu detektierende Unfallart mit einem Aufprall auf die Seite des Fahrzeugs außerhalb des Türbereichs besser erkannt werden kann.

### Zeichnung

Die Erfindung wird nachfolgend unter Bezug auf die Zeichnung näher erläutert. Dabei zeigt
- Figur 1: zwei Fahrzeuge bei einem Zusammenstoß,
- Figur 2: eine Aufsicht auf ein mit mehreren Sensoren bestücktes Fahrzeug,
- Figur 3: ein Fahrzeug in Frontansicht,
- Figur 4: ein Blockdiagramm eines Sicherheitssystems,
- Figur 5: eine Aufsicht auf ein Fahrzeug bei einer Ausführungsvariante der Erfindung.

### Beschreibung der Ausführungsbeispiele

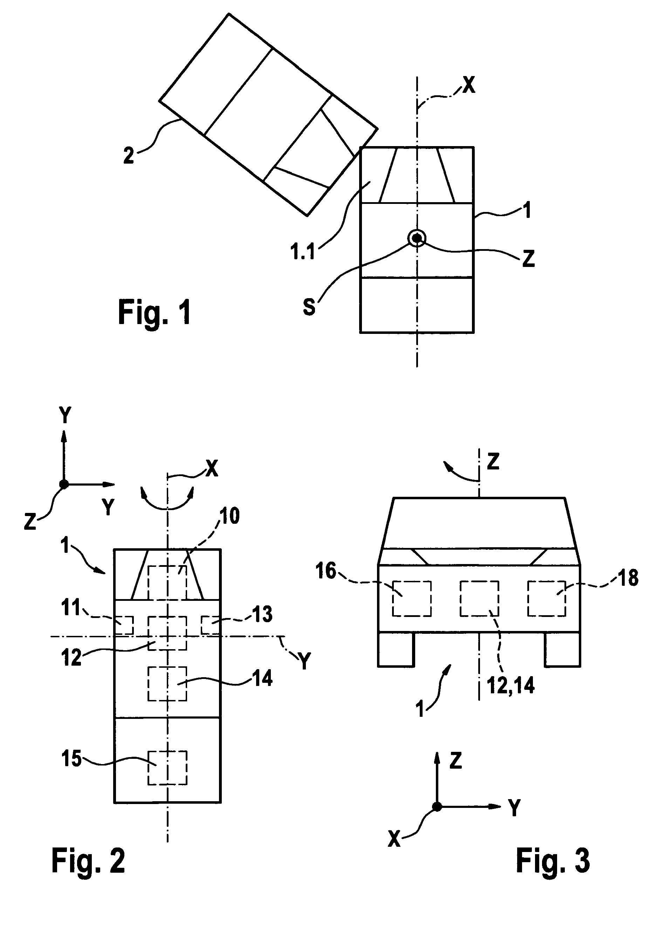

Figur 1 zeigt eine Unfallsituation, bei der zwei Fahrzeuge 1, 2 zusammengestoßen sind. Ein fremdes Fahrzeug 2 ist dabei seitlich bzw. schräg von vorn auf das eigene Fahrzeug 1 aufgeprallt und hat dieses in dem Bereich des vorderen linken Kotflügels 1.1 getroffen. Durch den Aufprall des fremden Fahrzeugs 2 erfährt das eigene Fahrzeug 1 eine Beschleunigung in Stoßrichtung. Da dabei die Kraft außerhalb des Schwerpunkts S des Fahrzeugs 1 angreift, wird ein Drehimpuls auf das Fahrzeug 1 ausgeübt, der das Fahrzeug 1 in eine Rotation um die z- oder Hochachse versetzt. Diese Rotation kann vorteilhaft mit einem Drehratensensor erfasst werden, der für eine Rotation um die z- Achse empfindlich ist. Ferner wird das Fahrzeug 1 durch die Stoßeinwirkung auf der Unfallseite und durch die Bremswirkung der Reifen auf der dem Aufprall abgewandten Seite ein Drehmoment um die x- oder Längsachse des Fahrzeugs 1 erfahren und dadurch wenigstens eine Wankbewegung ausführen oder sich sogar überschlagen. Diese Wankbewegung kann vorteilhaft wieder mittels eines für Drehbewegungen um die x-Achse empfindlichen Drehratensensors erfasst werden. Durch Auswertung der Ausgangssignale der Drehratensensoren können somit der Ort des Zusammenstoßes und die Stoßrichtung erfasst werden. Eine analoge Betrachtung gilt, falls der Aufprall vorn rechts oder in dem Heckbereich des Fahrzeugs 1, das heißt hinten rechts oder hinten links stattfindet. Der Hauptvorteil der Erfindung besteht somit darin, dass mittels der erfinderischen Lösung eine bisher schwierig zu detektierende Unfallart mit einem Aufprall auf die Seite des Fahrzeugs 1 außerhalb des Türbereichs besser erkannt werden kann.
Eine besonders vorteilhafte Sensoranordnung wird unter Bezug auf die schematischen Fahrzeugdarstellungen in Figur 2 und Figur 3 erläutert. Dabei zeigt Figur 2 eine Aufsicht auf ein Fahrzeug 1. Zusätzlich ist in Figur 2 ein rechtwinkliges Koordinatensystem mit den Achsen x, y, z eingezeichnet, um die Lage der Achsen des Fahrzeugs 1 zu verdeutlichen. Die x-Achse verläuft in Längsrichtung des Fahrzeugs 1, die y-Achse verläuft in Querrichtung des Fahrzeugs 1 senkrecht dazu und die z-Achse steht senkrecht auf der von der x-Achse und der y-Achse aufgespannten Ebene. Das Fahrzeug 1 trägt eine Vielzahl von Sensoren der eingangs schon näher beschriebenen Art. Mit 10 und 15 sind beispielsweise Sensoren bezeichnet, die für Beschleunigungen empfindlich sind. Je einer dieser Sensoren ist in dem Heckbereich (Sensor 15) und dem Frontbereich (Sensor 10) des Fahrzeugs 1 angeordnet. In einer Ausführungsvariante kann auch lediglich nur 1 zentral in dem Fahrzeug 1 angeordneter Sensor vorgesehen sein. Mit 11 und 13 sind Sensoren bezeichnet, die in den Seitenbereichen des Fahrzeugs 1 angeordnet und die für die Erkennung eines Seitenaufpralls vorgesehen sind. Diese Sensoren 11,13 sind vorzugsweise für Druck empfindlich, der bei einem Aufprall auf die Seiten des Fahrzeugs entsteht. Mit 12 ist ein Sensor bezeichnet, der eine Drehrate um die Längsachse des Fahrzeugs, also die x-Achse erfasst. Mit 14 ist ein Sensor bezeichnet, der eine Drehrate um die Hochachse des Fahrzeugs 1, also die z-Achse, erfasst. Anstelle getrennter Sensoren 12,14 kann in einer Ausführungsvariante auch ein Sensor zum Einsatz kommen, der die Drehraten in zwei oder mehr Achsen, insbesondere drei Achsen erfasst.

Figur 3 zeigt, in schematischer Darstellung, ein Fahrzeug 1 in Frontansicht, zusammen mit den Achsen x, y, z eines Koordinatensystems. Weiterhin angedeutet sind die in dem Fahrzeug 1 angeordneten Drehratensensoren 12 und 14. Zusätzlich eingezeichnet sind in dem Frontbereich des Fahrzeugs 1 angeordnete Sensoren 16, 18, die vorzugsweise eine Precrashfunktion haben.

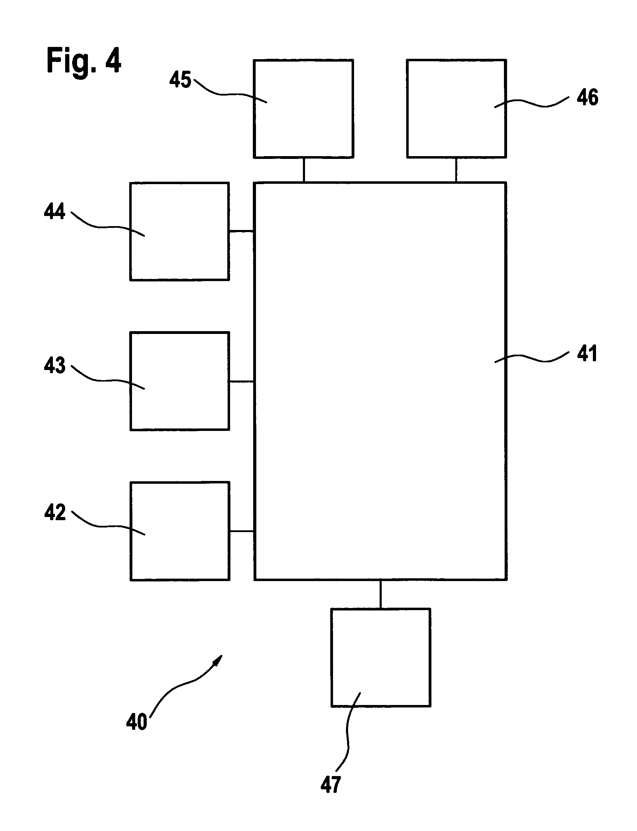

Figur 4 zeigt noch ein Blockdiagramm eines erfindungsgemäßen Sicherheitssystems. Das Sicherheitssystem 40 umfasst ein Steuergerät 40. Mit dem Steuergerät 40 sind wenigstens ein oder mehrere Sensoren 42,43,44,45 und 46 verbunden. Mit Bezugsziffer 42 ist wenigstens ein Beschleunigungssensor bezeichnet. Mit Bezugsziffer 43 ist wenigstens ein Drucksensor bezeichnet. Mit Bezugsziffer 44 ist wenigstens ein Precrashsensor bezeichnet. Mit Bezugsziffer 45 ist ein Drehratensensor bezeichnet, der eine Drehbewegung des Fahrzeugs 1 um die x-Achse erfasst. Mit Bezugsziffer 46 ist ein Drehratensensor bezeichnet, der eine Drehbewegung des Fahrzeugs um die z-Achse erfasst. Mit Bezugsziffer 47 ist wenigstens ein Aktor bezeichnet.
Im Folgenden wird die Funktionsweise des Sicherheitssystems 40 beschrieben. Die Sensoren 42,43,44 erfassen, ihrer Funktion entsprechend, Beschleunigungen, Druckwerte oder in dem Umfeld des Fahrzeugs 1 befindliche Hindernisse. Das Steuergerät 41 wertet die Ausgangssignale der Sensoren 42,43,44 aus und steuert im Falle von Gefahr den wenigstens einen Aktor 47, beispielsweise Airbags und/oder Gurtstraffer. Zusätzlich erfassen die Drehratensensoren 45,46 Drehbewegungen des Fahrzeugs 1, insbesondere um seine z- und seine x-Achse. Durch die Auswertung dieser Drehbewegungen (Gierrate und Wankrate) kann der Ort des Aufpralls auf das Fahrzeug 1 noch genauer als bisher möglich bestimmt werden. Durch die Auswertung von Gierrate und Wankrate kann zudem auf die Schwere des Unfalls geschlossen werden. Hierfür kann vorteilhafterweise zum Beispiel die zeitliche Änderung des Signals betrachtet werden. Folglich können auch Rückhaltemittel zum Schutz der Fahrzeuginsassen noch zielgerichteter und differenzierter als bisher zum Einsatz gebracht werden. Falls beispielsweise das Fahrzeug 1 über mehrstufig aktivierbare Airbags verfügt, können zum Schutz eines Fahrzeuginsassen alle Stufen des ihm zugeordneten Airbags gezündet werden. Bei einem durch den Aufprall weniger gefährdeten Insassen reicht dann ggf. schon die Aktivierung lediglich einer Stufe des Airbags.

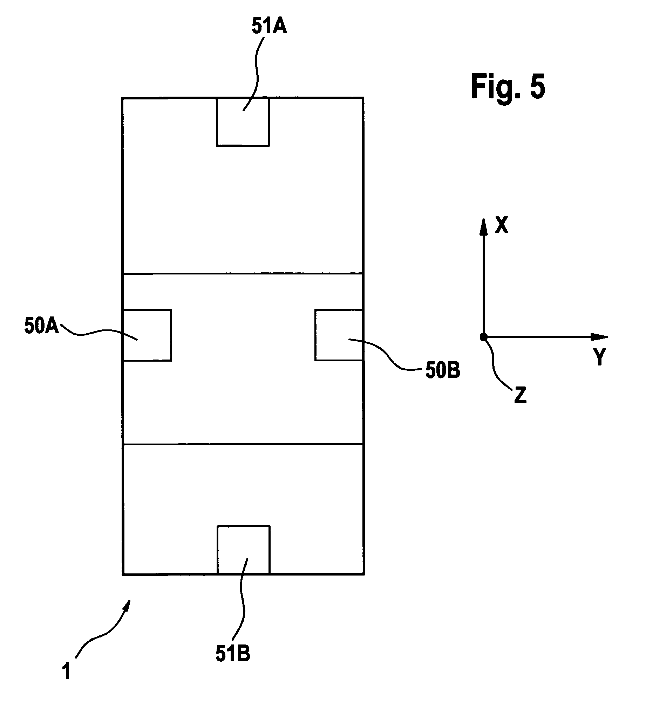

Eine weitere Ausführungsvariante der Erfindung ist in Figur 5 dargestellt. Figur 5 zeigt eine Aufsicht auf ein Fahrzeug 1 zusammen mit einem Koordinatensystem. Anstelle eines Drehratensensors, der eine Drehung des Fahrzeugs 1 um die z-Achse erfasst, sind hier zwei für Beschleunigungen empfindliche Sensoren 51A, 51B vorgesehen, die Beschleunigungen in Richtung der y-Achse erfassen. Der Beschleunigungssensor 51A ist dabei in dem Frontbereich des Fahrzeugs 1, der Beschleunigungssensor 51B in dem Heckbereich des Fahrzeugs 1 angeordnet. Bei einer Drehung des Fahrzeugs 1 um seine z-Achse werden beide Sensoren ein Ausgangssignal liefern, das betragsmäßig im Wesentlichen gleich groß aber entgegengesetzt gerichtet ist. Weiterhin umfasst das Fahrzeug 1 zwei für Beschleunigungen empfindliche Sensoren 50A, 50B, die in der linken Fahrzeugseite (Sensor 50A), beziehungsweise in der rechten Fahrzeugseite (Sensor 50B) angeordnet sind. Diese Sensoren 50A,50B können vorzugsweise Beschleunigungen in Richtung der z-Achse des Fahrzeugs 1 detektieren. Eine Drehung des Fahrzeugs um seine x-Achse kann dadurch erkannt werden, dass beide Sensoren 50A, 50B ein Ausgangssignal liefern, das betragsmäßig im Wesentlichen gleich groß aber entgegengesetzt gerichtet ist.

## Patentansprüche

1. Sicherheitssystem (40) für Fahrzeuginsassen mit wenigstens einem Sensor (13,14,15,42.43,44,45,46,50A,50B,51A,51B), und wenigstens einem Steuergerät (41), wobei das Sicherheitssystem (40) Sensoren (45,46,50A,50B,51A,51B) für die Erfassung von Drehbewegungen des Fahrzeugs (1) umfasst, wobei das Sicherheitssystem (40) Sensoren für die Erfassung von Drehbewegungen des Fahrzeugs (1) um die x-Achse und die z-Achse umfasst, wobei das Sicherheitssystem (40) wenigstens je einen Drehratensensor (45,46) für die Erfassung einer Drehbewegung des Fahrzeugs (1) um die z- bzw. x-Achse umfasst, **dadurch gekennzeichnet, dass** bei einem Aufprall schräg von vorn oder schräg von hinten durch die Auswertung der Drehbewegungen um die X- und die Z-Achse auf den Ort des Aufpralls und die Schwere des Aufpralls geschlossen wird.

2. Sicherheitssystem nach einem der vorhergehenden Anspruch 1, **dadurch gekennzeichnet, dass** das das Sicherheitssystem (40) für die Erfassung einer Drehbewegung des Fahrzeugs (1) um seine z-Achse wenigstens zwei für Beschleunigungen in Richtung der y-Achse des Fahrzeugs (1) empfindliche Sensoren (51A,51B) umfasst, wobei je einer der Sensoren (51A,51B) in dem Frontbereich des Fahrzeugs (1) und in dem Heckbereich des Fahrzeugs (1) angeordnet ist.

3. Sicherheitssystem nach einem der vorhergehenden Ansprüche, **dadurch gekennzeichnet, dass** das Sicherheitssystem (40) für die Erfassung einer Drehbewegung des Fahrzeugs (1) um seine x-Achse wenigstens zwei für Beschleunigungen in Richtung der z-Achse empfindliche Sensoren (50A,50B) umfasst, wobei je einer der Sensoren (50A,50B), in dem linken Bereich des Fahrzeugs (1) und in dem rechten Bereich des Fahrzeugs (1) angeordnet ist.

4. Verfahren für die Steuerung eines Sicherheitssystems (40) für Fahrzeuginsassen, welches Sensoren und ein Steuergerät umfasst, wobei mittels Sensoren (45,46,50A,50B,51A,51B) Drehbewegungen des Fahrzeugs (1) erfasst werden, **dadurch gekennzeichnet, dass** durch Auswertung der bei einem Aufprall schräg von vorn oder schräg von hinten erfassten Drehbewegungen Informationen über den Aufprallort an dem Fahrzeug (1) abgeleitet werden, dass Drehbewegungen des Fahrzeugs (1) um die z- und die x-Achse erfasst werden, dass die Drehbewegung des Fahrzeugs (1), beispielsweise in Form ihrer zeitlichen Änderung, erfasst wird und dass daraus Hinweise über die Schwere des Unfalls abgeleitet werden.

## Claims

1. Safety system (40) for vehicle occupants, having at least one sensor (13, 14, 15, 42, 43, 44, 45, 46, 50A, 50B, 51A, 51B) and at least one controller (41), with the safety system (40) comprising sensors (45, 46, 50A, 50B, 51A, 51B) for detecting rotary movements of the vehicle (1), with the safety system (40) comprising sensors for detecting rotary movements of the vehicle (1) about the x-axis and the z-axis, with the safety system (40) comprising in each case at least one rate of rotation sensor (45, 46) for detecting a rotary movement of the vehicle (1) about the z-axis and, respectively, the x-axis, **characterized in that**, in the event of an impact diagonally from the front or diagonally from the rear, conclusions are drawn about the site of the impact and the severity of the impact by evaluating the rotary movements about the x-axis and the z-axis.

2. Safety system according to preceding Claim 1, **characterized in that** the safety system (40) comprises at least two sensors (51A, 51B) which are sensitive to accelerations in the direction of the y-axis of the vehicle (1), in order to detect a rotary movement of the vehicle (1) about its z-axis, with one of the sensors (51A, 51B) being arranged in the front region of the vehicle (1) and one being arranged in the rear region of the vehicle (1).

3. Safety system according to either of the preceding claims, **characterized in that** the safety system (40) comprises at least two sensors (50A, 50B) which are sensitive to accelerations in the direction of the z-axis, in order to detect a rotary movement of the vehicle (1) about its x-axis, with one of the sensors (50A, 50B) being arranged in the left-hand region of the vehicle (1) and the other being arranged in the right-hand region of the vehicle (1).

4. Method for controlling a safety system (40) for vehicle occupants, which safety system comprises sensors and a controller, with rotary movements of the vehicle (1) being detected by means of sensors (45, 46, 50A, 50B, 51A, 51B), **characterized in that** information about the impact site on the vehicle (1) are derived by evaluating the rotary movements which are detected in the event of an impact diagonally from the front or diagonally from the rear, **in that** rotary movements of the vehicle (1) about the z-axis and the x-axis are detected, **in that** the rotary movement of the vehicle (1), for example in the form of the change in the said rotary movement over time, is detected, and **in that** details about the severity of the accident are derived from this.

## Revendications

1. Installation de sécurité (40) pour les occupants d'un véhicule comportant au moins un capteur (13, 14, 15, 42, 43, 44, 45, 46, 50A, 50B, 51A, 51B), et au moins un appareil de commande (41), le système de sécurité (40) comportant des capteurs (45, 46, 50A, 50B, 51A, 51B) pour saisir les mouvements de rotation du véhicule (1),
le système de sécurité (40) comportant des capteurs pour saisir les mouvements de rotation du véhicule autour de l'axe (x) et de l'axe (z),
le système de sécurité (40) comportant au moins un capteur de vitesse de rotation (45, 46) pour saisir un mouvement de rotation du véhicule (1) autour de l'axe (z) ou de l'axe (x),
**caractérisée en ce qu'**
en cas de choc en biais de l'avant ou en biais de l'arrière, l'exploitation des mouvements de rotation autour de l'axe (x) et de l'axe (z) permet de conclure à l'emplacement du choc et à la gravité de celui-ci.

2. Système de sécurité selon la revendication 1,
**caractérisé en ce que**
le système de sécurité (40) pour la saisie d'un mouvement de rotation du véhicule (1) autour de son axe (z) comporte au moins deux capteurs (51A, 51B) sensibles à des accélérations dans la direction de l'axe (y) du véhicule (1), et chacun des capteurs (51A, 51B) est installé dans la région frontale et dans la région arrière du véhicule (1).

3. Système de sécurité selon l'une des revendications précédentes,
**caractérisé en ce que**
le système de sécurité (40) pour saisir un mouvement de rotation du véhicule (1) autour de son axe (x) comporte au moins deux capteurs (50A, 50B) sensibles aux accélérations dans la direction de l'axe (z), et un capteur respectif (50A, 50B) est installé dans la région gauche et un dans la région droite du véhicule (1).

4. Procédé de commande un système de sécurité (40) pour les occupants d'un véhicule comprenant des capteurs et un appareil de commande, des mouvements de rotation du véhicule (1) étant saisis à l'aide de capteurs (45, 46, 50A, 50B, 51A, 51B),
**caractérisé en ce que**
par l'exploitation des mouvements de rotation en cas de choc en biais de l'avant ou en biais de l'arrière, on en déduit des informations concernant l'emplacement du choc contre le véhicule (1),
on saisit les mouvements de rotation du véhicule (1) autour de l'axe (x) et de l'axe (z),
on saisit le mouvement de rotation du véhicule (1) par exemple sous la forme d'une variation en fonction du temps et on en déduit des indications concernant la gravité de l'accident.
